(19) Europäisches Patentamt
European Patent Office
Office européen des brevets

(11) Veröffentlichungsnummer: **0 155 477**
**A2**

(12) # EUROPÄISCHE PATENTANMELDUNG

(21) Anmeldenummer: **85101025.6**

(22) Anmeldetag: **01.02.85**

(51) Int. Cl.⁴: **C 01 B 3/22**
C 21 D 1/76

(30) Priorität: **04.02.84 DE 3403987**

(43) Veröffentlichungstag der Anmeldung:
**25.09.85 Patentblatt 85/39**

(84) Benannte Vertragsstaaten:
**AT BE DE FR GB IT**

(71) Anmelder: **Nicolai, Stephan Peter**
**Am Neuen Busch 2**
**D-4230 Wesel 13(DE)**

(72) Erfinder: **Nicolai, Andreas**
**Poststrasse 4**
**D-4320 Hattingen(DE)**

(74) Vertreter: **Allgeier, Kurt**
**Florastrasse 56**
**D-4020 Mettmann 2(DE)**

(54) **Verfahren zur Herstellung von halbsynthetischen Schutz- und Reaktionsgasen zur Wärmebehandlung von Stahl-und Metallwerkstoffen, bestehend aus einer Mischung unterschiedlich wählbarer Mengen von Stickstoff, Wasserstoff, Kohlenmonoxyd, Kohlendioxyd sowie Wasserdampf.**

(57) Verfahren zur Herstellung von halbsynthetischen Schutz- und Reaktionsgasen, insbesondere zur Wärmebehandlung von Stahl- und Metallwerkstoffen, bestehend aus einer Mischung unterschiedlich wählbarer Mengen von Stickstoff, Wasserstoff, Kohlenmonoxyd, Kohlendioxyd sowie Wasserdampf, bei dem dem Stickstoffgas oder einem Stickstoff-Wasserstoff-Gasgemisch die mittels eines katalytischen Methanolspaltverfahrens gewonnenen Spaltgase Wasserstoff und Kohlenmonoxyd, sowie Kohlendioxyd zugemischt werden, und wobei das Methanol, dem als Trägergas vorgewärmter Stickstoff und oder Kohlendioxyd, Wasserstoff oder Spaltgas zugemischt wird, in einem Verdampfergefaß vollständig verdampft und darauf das Methanoldampf-Stickstoff-Gemisch in einem mit einem Katalysator gefüllten Reaktor bei einer Prozeßtemperatur von 270 – 300°C zu hauptsächlich CO und $H_2$ gespalten wird, und die Spaltgase vor der Zumischung einen Wärmetauscher zur Vorwarmung des Stickstoff-Trägergases durchlaufen, wobei zur $CO_2$-Entfernung in den Verfahrensablauf zwei alternierend zu-und abschaltbare, mit flüssigem Stickstoff betriebene Wärmetauscher eingesetzt sein können, in denen abwechselnd das Kohlendioxyd ausgefroren und während des Zufrierens des einen Wärmetauschers der andere mit vorgewärmten Stickstoff getrocknet und gespült werden kann.

./...

EP 0 155 477 A2

Croydon Printing Company Ltd

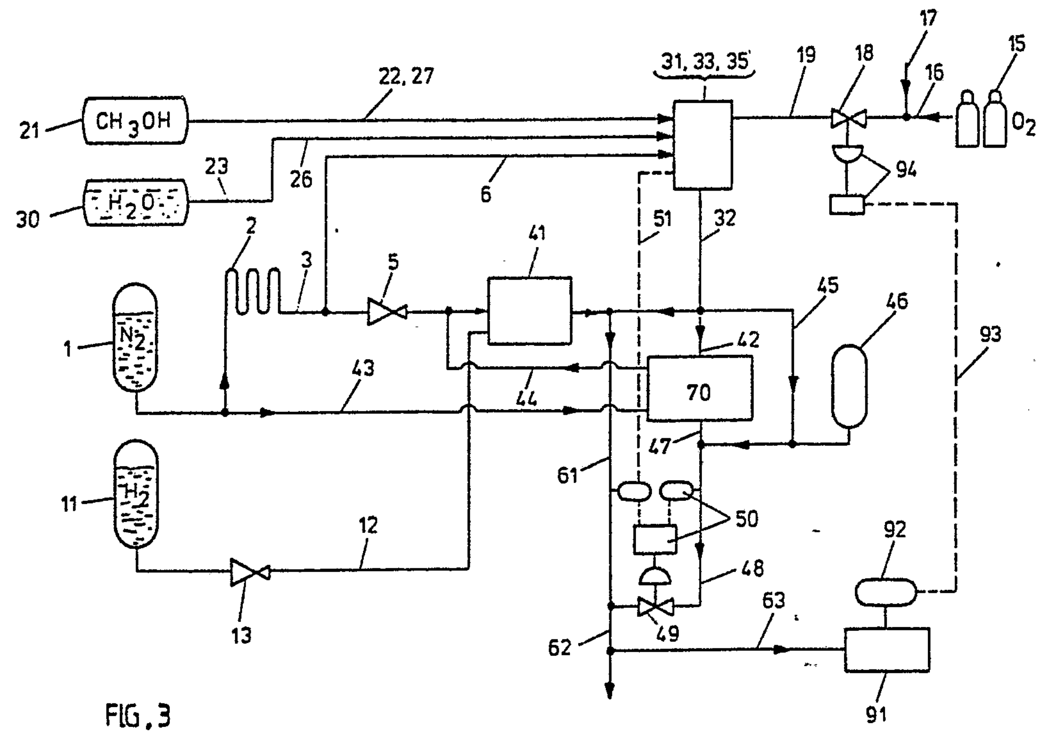

21
CH 3 OH
22, 27
31, 33, 35
19
18
17
16
15
$O_2$
30
H 2 O
23
26
6
94
2
3
5
41
51
32
45
46
1
N2
42
70
44
43
93
47
11
H2
61
50
12
13
48
92
49
63
62
91


FIG. 3

Stephan Peter Nicolai
Am Neuen Busch 2
423o Wesel 13

4252 EPA - A./St.

Verfahren zur Herstellung von halbsynthetischen Schutz- und Reaktionsgasen, insbesondere zur Wärmebehandlung von Stahl- und Metallwerkstoffen, bestehend aus einer Mischung unterschiedlich wählbarer Mengen von Stickstoff, Wasserstoff, Kohlenmonoxyd, Kohlendioxyd sowie Wasserdampf

Die Erfindung bezieht sich auf ein Verfahren zur Herstellung von halbsynthetischen Schutz- und Reaktionsgasen, insbesondere zur Wärmebehandlung von Stahl- und Metallwerkstoffen, bestehend aus einer Mischung unterschiedlich wählbarer Mengen von Stickstoff, Wasserstoff, Kohlenmonoxyd, Kohlendioxyd sowie Wasserdampf.

Hauptbestandteile dieser Schutz- und Reaktionsgase sind außer dem Hauptanteil Stickstoff noch Wasserstoff und Kohlenmonoxyd, aber auch Kohlendioxyd und Wasserdampf. Diese Gasgemische werden zumeist durch unvollständige Verbrennung von geeigneten Gasen wie Propan, Methan, Erdgas oder auch flüssigen Brennstoffen wie Heizöl, Petroleum u. dergl. gewonnen.

Verfahrensweisen dieser Art sind in Chemie-Ing.-Techn. Jahrg. 1968 Heft 24 S. 1196/97 beschrieben und dargestellt. Gasförmige Brennstoffe werden unterstöchiometrisch oder auch stöchiometrisch verbrannt, und je nach Prozeßführung erhält man ein Inertgas mit $N_2$ als Hauptbestandteil (73 - 9o Vol%) und u.a. CO zwischen 7 und 1o Vol%. Die Verbrennungsanlage ist - wie aus Fig. 5 S. 1197 ersichtlich - außerordentlich aufwendig und benötigt neben Brenner und Kompressor eine ganze Anzahl weiterer Aggregate. Insbesondere die Brennkammer für Temperaturen von 12oo - 15oo° C ist ein kostenaufwendiges Anlagenteil und muß nach kürzeren oder längeren Betriebszeiten stillgelegt und neu zugestellt werden. Hinzu kommen aufwendige Einrichtungen zum Reinigen durch Auswaschen der Schwefeloxyde sowie unerwünschter Gaskomponenten.

Außerdem sind Trocknungsanlagen zur Erzielung tiefer Taupunkte (Drucktrocknung, Absorptionstrocknung) erforderlich, und es müssen auch teilweise katalytische bzw. absorptive Verfahren z.B. zur Entfernung von Sauerstoff eingesetzt werden.

Soll möglichst reiner Stickstoff gewonnen werden, dann sind besondere $CO_2$-Entfernungsmaßnahmen (s. S. 1198) notwendig, sei es Absorption in Wasser, in Natron- oder Kalilaugen o. dergl. oder an Molekularsieben.

Auf Seite 1199 dieser Veröffentlichung ist auch ein Verfahren zur Gewinnung von Spaltgas aus Methanol erwähnt, bei dem in einem Spaltofen bei etwa 4oo° C eine wässerige Methanol-Lösung in Kohlendioxyd, Kohlenmonoxyd und Stickstoff zerlegt wird, wobei die Reaktion nach der Gleichung

$$CH_3OH + H_2O = CO_2 + 3 H_2$$

-3-

abläuft. Dabei stellt sich das Verhältnis von CO zu $CO_2$ entsprechend der vorhandenen Wasserdampfmenge und der Betriebstemperatur nach dem bekannten Wassergas-Gleichgewicht

$$K = \frac{P_{CO_2} \; P_{H_2}}{P_{CO} \; P_{H_2O}}$$

ein. In einem Konverter wird anschließend das Kohlenmonoxyd katalytisch zu Kohlendioxyd und Wasserdampf umgesetzt. Außerdem ist noch eine Anlage zur adsorptiven $CO_2$-Entfernung nachgeschaltet.

Die gemeinsamen Kennzeichen dieser Anlagen sind nicht nur ein hoher apparativer Aufwand mit zahlreichen störanfälligen Aggregaten, die von Zeit zu Zeit stillgelegt und überholt werden müssen, oder es sind die Katalysatoren auszutauschen, sondern es ist weiterhin nachteilig, daß diese Anlagen einen hohen Energieaufwand benötigen, weil mehrere Kühlaggregate einen großen Teil der aufgewendeten Wärmemenge vernichten, ohne daß diese im Gesamtprozeß wieder eingesetzt werden können.

Die bekannten Verfahrensweisen arbeiten häufig deshalb für die Praxis nicht befriedigend, weil die Zusammensetzung der Schutzgase teils aufgrund von Umwelteinflüssen nicht immer absolut konstant gehalten werden kann. Störungen anderer Art können bei Stromausfall auftreten, so daß die Schutzgasgeneratoren ausfallen und dementsprechend Luft in die Schutzgasatmosphäre eindringt. Nachteilig erscheint ferner, daß die Zusammensetzung des Schutzgases entsprechend den gewünschten Eigenschaften betriebsmäßig nicht genügend variiert werden kann.

Der Erfindung liegt die Aufgabe zugrunde, eine Verfahrensweise anzugeben und zu deren Durchführung geeignete Vorrichtungen vorzuschlagen, die es ermöglichen, derartige Schutz- und Wärmebehandlungsgase unter erheblich geringerem technischen Aufwand und mit konstanter Qualität und absolut gleichbleibender Zusammensetzung halbsynthetisch herzustellen. Ferner soll die erfindungsgemäße Verfahrensweise breitere Möglichkeiten zur betriebsmäßigen Variierung der Zusammensetzung des Schutzgases entsprechend der unterschiedlichen Verwendungs- und Einsatzzwecke bieten, und vor allem soll auch eine größere Betriebssicherheit gegen Störungen aufgrund von Umwelteinflüssen oder bei Stromausfall ermöglicht werden. Bei der halbsynthetischen Erzeugung können Umwelteinflüsse nicht einwirken, und bei Stromausfall soll wenigstens eine gewisse Schutzatmosphäre durch eine weiterlaufende Stickstoffzufuhr aufrechterhalten werden. Darüber hinaus strebt die Erfindung die Verringerung des erforderlichen apparativen Vorrichtungs- und auch des Wartungsaufwandes an.

Der Erfindung liegt daher die Aufgabe zugrunde, ein Verfahren und eine Vorrichtung zur Herstellung von halbsynthetischen Schutz- und Reaktionsgasen zu schaffen, die insbesondere zur Wärmebehandlung von Stahl- und Metallwerkstoffen geeignet sind und die aus einer Mischung unterschiedlich wählbarer Mengen von Stickstoff, Wasserstoff, Kohlenmonoxyd, Kohlendioxyd sowie Wasserdampf bestehen. Die erfindungsgemäße Lösung besteht darin, daß dem Stickstoffgas oder einem Stickstoff-Wasserstoff-Gasgemisch die mittels katalytischen Methanolspaltung gewonnenen Spaltgase Wasserstoff und Kohlenmonoxyd sowie Kohlendioxyd zugemischt werden, und daß dem zugeführten,

in einem weiten Bereich mengenregelbaren Methanol als Wärmetransportmittel wirkendes vorgewärmtes Stickstoffgas als Trägergas zugemischt und dieses Gemisch dann in ein Verdampfergefäß gedrückt und dort bei einer Temperatur von 27o$^{0}$ bis 3oo$^{0}$ C vollständig verdampft wird, und daß darauf das Methanoldampf-Stickstoffgas-Gemisch mit seiner Temperatur von 27o$^{0}$ bis 3oo$^{0}$ C in einem mit einem Katalysator gefüllten Reaktor bei einer dauernd aufrechterhaltenen Prozeßtemperatur von 27o$^{0}$ - 3oo$^{0}$ C zu hauptsächlich CO und $H_2$ gespalten wird, und daß die Spaltgase vor der Zumischung zum Herstellen des Schutz- und Reaktionsgases einen Wärmetauscher zur Vorwärmung des Trägergases durchlaufen und dabei auf ca. 6o$^{0}$ C abgekühlt werden.

Mit der Erfindung wird ein in sich geschlossenes System zur Herstellung von Schutzgasen aller Art vorgeschlagen, dessen wesentlicher Verfahrensbestandteil in dem vorteilhaften katalytischen Methanol-Spaltprozeß besteht, der ein in sich geschlossenes System ohne Luftzufuhr darstellt. Dabei wird das Methanol bei 27o$^{0}$ C - 3oo$^{0}$ C ($CH_3OH$) verdampft und der Methanoldampf wird katalytisch zu Wasserstoff ($H_2$) und Kohlenmonoxyd (CO) gespalten, nach folgender Reaktionsgleichung :

$$CH_3OH \;\; === \;\; 2H_2 \; + \; CO \; = \; \text{Spaltgas}$$

$$1\ l \; = \; o{,}84\ Nm^3 \; + \; o{,}42\ Nm^3 \; = \; 1{,}66\ Nm^3$$

und nicht (wie auch möglich) zu

$$CH_3OH \;\; === \; 1/2\ C \; + \; 1/2\ CO_2 \; + \; 2H_2$$

Mit Hilfe des Katalysators und des Stickstoff-Trägergases verläuft der Spaltprozeß vollständig wie gewünscht zu CO und $2H_2$. Dabei verhindert die Zugabe des vorgewärmten Stickstoffes als Trägergas, daß es bereits im Verdampfer durch partielle Überhitzungserscheinungen zu einer thermischen Methanolspaltung kommt. Vielmehr läuft der nachfolgende Spaltprozeß rein katalytisch ab, um das Gleichgewicht der Reaktionsgleichung zugunsten des CO zu verschieben. Die besten Analysen des Spaltgases ergeben sich zwischen 270° und 300° C. Dieses Spaltgas kann in jedem Verhältnis mit Stickstoff gemischt werden.

Zum Ausgleich zwischen auftretenden Schutzgasmengenschwankungen und dem Anfall an Spaltgas ist vorgesehen, dieses in einen Puffer einzuspeisen, von dem aus das Spaltgas im vorgesehenen Verhältnis zur Schutz- bzw. Reaktionsgasmenge dosiert, kontinuierlich analysiert und bei Regelabweichung das Mengenverhältnis selbsttätig korrigiert wird.

Da verfahrensgemäß jegliche Luftzufuhr unterbunden ist, wird bei einem Taupunkt des Stickstoffes von besser - 60° C mit Sicherheit ein Feuchtigkeitswert des Spaltgases mit einem Taupunkt von besser - 15° C erzielt, was ein ausgezeichnetes Ergebnis ist. Für den Sauerstoffgehalt gilt ähnliches; es kann ein Sauerstoffgehalt besser als 100 ppm garantiert werden.

Diese optimalen Werte werden erzielt, wenn auf absolute Dichtheit des Systems gegen Außenluft geachtet wird. Beim Auftreten von Undichtigkeiten und/oder von Wassergehalt des Methanols führt dies zu einer CO-Konzentrationsminderung um ca. max. 8 % zugunsten von $CO_2$. Soll jedoch eine bestimmte Verschiebung des durch die Reaktionsgleichung bestimmten Verhältnisses von Wasserstoff zu Kohlenmonoxyd erreicht werden, so kann nach einem weiteren Verfahrensmerkmal dem Methanol eine entsprechend dosierte Menge von entsalztem Wasser zugegeben werden, wodurch neben dem Spaltprozeß eine zweite katalytische Reaktion in dem Reaktor abläuft, und zwar:

$$CO + H_2 === H_2 + CO_2$$

$$0{,}55\ Nm^3 + 0{,}45\ l = 0{,}55\ Nm^3 + 0{,}55\ Nm^3$$

Wie aus der Reaktionsgleichung hervorgeht, steigt der $H_2$-Anteil bei gleicher Menge Methanol.

Nach einem weiteren wesentlichen Verfahrensmerkmal kann alternativ oder zusätzlich zur Zumischung von Wasser auch Sauerstoff oder Luft in entsprechend dosierter Menge dem Methanol zugegeben werden, so daß sich im Methanolspaltreaktor eine weitere katalytische Reaktion ergibt :

$$CO + 1/2\ O_2 === CO$$

$$0{,}55\ Nm^3 + 0{,}225\ l = 0{,}55\ Nm^3$$

Die Methanolspaltvorrichtung arbeitet mit einem Verdampfer, um das Methanol-Trägergas-Gemisch auf die Reaktionstemperatur von $270^\circ$ - $300^\circ$ C aufzuheizen und dem bei ebenfalls $270^\circ$ - $300^\circ$ C betriebenen Reaktor. Hierzu wird vorgeschlagen, daß mittels eines im Kreislauf geführten fremdbeheizten Wärmeträgermediums der Verdampfer für das auf $60^\circ$ C vorgewärmte Methanol-Trägergas-Gemisch sowie das Reaktorgefäß auf ca. $280^\circ$ C aufgeheizt wird, und daß sich die Temperaturschwankung zwischen Vor- und Rücklauf des Wärmeträgermediums nicht über $5^\circ$ C erhöht.

Zur $CO_2$-Entfernung bzw. zur Verbesserung des Spaltgases bezüglich einer etwa darin enthaltenen Restfeuchte kann nach der weiteren Erfindung eine aus zwei alternierend zu- und abschaltbaren Wärmetauschern bestehende, eine mit flüssigem Stickstoff betriebene Kühlfalle eingesetzt werden der in den ersten Wärmetauscher dem Spalt-Rohgas entgegenströmt und je nach Austrittstemperatur des Spalt-Reingases das Kohlendioxyd ausfriert, wobei der flüssige Stickstoff verdampft und dem Hauptstickstoffstrom wieder zugeführt wird, und wobei ferner während des Zufrierens des ersten Wärmetauschers der zweite abgeschaltete Wärmetauscher mit dem vorgewärmten Stickstoff getrocknet wird und nach Umschalten auf den zweiten Wärmetauscher dieser zugefroren und der erste abgeschaltete Wärmetauscher getrocknet wird.

Außer durch die eingangs zitierte Literaturstelle ist das Methanolspaltverfahren auch anderweitig ausführlicher beschrieben, z.B. in INDUSTRIAL AND ENGENEERING CHEMISTRY Vol. 4o (1948) S. 583 bis 586. Dort ist eine Versuchsanlage und eine industrielle Anlage für dieses Verfahren behandelt. Bei dem Versuchsverfahren nahm bereits nach 9o bis 115 Stunden ununterbrochenem Betrieb die Spaltgas-Erzeugungsrate deutlich ab, und es wurde dann die Reaktionstemperatur von 35o - 4oo° C auf 45o° und dann auf 5oo° C erhöht; trotzdem nahm die Erzeugungsrate weiter ab, so daß nach 3oo Stunden zur Regenerierung der Katalysatoren eine Betriebsunterbrechung von 6 Stunden benötigt wurde. Vor der Regenerierung des Katalysators war dessen Temperatur über 1000°C gestiegen und hatte den Generator deformiert. Bei der industriellen Anlage wurde bei einer Temperatur zwischen 260 und 320°C der Katalysator nach 79, 125, 358, 379, 538 und 558 Betriebsstunden regeneriert.

Das Verfahren ist ferner in der Europäischen Patentanmeldung 0038 682 beschrieben, und es werden auch dort die bekannten Parameter dieses Verfahrens behandelt, abgesehen von einem neuartigen Katalysator, mit dem eine längere Standzeit erreicht werden soll, und der im wesentlichen aus einem kristallinen Silikat besteht, dessen Kristallgitter Einschlüsse aus Kobalt aufweist, deren Korngröße etwa der der Silizium-Atome entspricht. Ein solcher Katalysator soll nach diesem Vorschlag eine hohe Aktivität und lange Standzeit aufweisen.

Das in großem Umfang im Handel erhältliche Methanol kann nach dieser Beschreibung in eine Strömung von Synthesegas umgesetzt und dieses kann für weitere nachgeschaltete Prozesse verwendet werden. Das Methanol sollte möglichst wasserfrei sein, oder es kann auch Wasser bis zu z.B. 9o % w/w enthalten. Andererseits kann auch Wasser separat in Form von Dampf zugeführt werden. Darüber hinaus kann das Methanol auch mit Kohlenmonoxyd, Kohlendioxyd oder rückgeführtem Synthesegas verdünnt werden. Da die Zersetzung von Methanol endotherm verläuft, bietet die Anwendung von Verdünnungsmitteln eine geeignete Methode, der Reaktion Wärme zuzuführen.

Aus dieser Schrift ist somit zu entnehmen, daß der Spaltprozeß endotherm verläuft und es daher vorteilhaft ist, ihm Wärme zuzuführen. Es fehlt jedoch die weitere Erkenntnis, daß bei ausreichender Zuführung eines derartigen Wärmeträgergases zwei Vorteile erreicht werden, nämlich daß

a) wegen des besseren Wärmetransports an die Korngrenzen des Katalysators der Spaltprozeß dauernd richtig abläuft und nicht zu $1/2\ C + 1/2\ CO_2 + 2H_2$ verändert wird,



BAD ORIGINAL

b) wegen der feineren Verteilung des Methanoldampfes zu den Oberflächen des porösen Katalysators vermieden wird, daß sich dieser zusetzt.

Auch fehlt dem durch diese Schrift dokumentierten Stand der Technik die weitere Erkenntnis, daß sich Stickstoff besonders als Wärmeträgergas eignet, denn er nimmt an der Reaktion nicht teil, sondern verbleibt in dem erzeugten Spaltgasstrom und ist bei der Herstellung des Schutz- oder Reaktionsgases erwünscht und wird lediglich durch weitere Stickstoffzugaben ergänzt.

Daraus ergibt sich, daß dem Stand der Technik aus dem Wissensstand, daß der Spaltprozeß endotherm verläuft mehrere Erkenntnisse verschlossen geblieben sind, nämlich daß die fortdauernde Verschlechterung der Spaltreaktion an den Korngrenzen des Katalysators unterbunden werden kann und daß somit ein fortdauernder Reaktionsverlauf zu $2H_2 + CO$ gewährleistet werden kann, und ferner, daß deshalb dauernde Betriebsunterbrechungen vermieden werden, sondern eine ununterbrochene Spaltgaserzeugung erzielt werden kann, und es fehlte auch an der weiteren Erkenntnis, daß gerade wegen dieser Eigenschaften und der äußerst vorteilhaften Verwendbarkeit von Stickstoff als Trägergas dieses Methanolspaltverfahren zur Herstellung von Schutz- und Reaktionsgasen weitaus vorteilhafter ist, als die bisher gebräuchlichen Verbrennungsverfahren.

Durch die erfindungsgemäß wesentliche Zugabe von Stickstoff zu dem Methanol werden ferner in dem mit Katalysator gefüllten Reaktor die bekannten Nachteile bei solchen Prozessen vermieden, wie übermäßige und schwer zu

kontrollierende Wärme, sehr hohe Reaktionsgeschwindigkeiten und -temperaturen, schwer beherrschbare Nebenreaktionen. Dadurch entfallen auch die Schwierigkeiten weitgehend, die eine sehr aufwendige Temperaturregelung erfordern, starken Druckabfall hervorrufen und den Durchsatz begrenzen.

Auch treten wegen der mit 27o$^{o}$ bis 3oo$^{o}$ C begrenzten Reaktionstemperaturen im Reaktor keine schwierigen konstruktiven Probleme auf.

Das erfindungsgemäße Methanolspaltverfahren kann mit konstanter Methanolmenge arbeiten; das hergestellte Spaltgas wird kontinuierlich in ein Puffergefäß eingespeist. Darüber hinaus überflüssiges Spaltgas kann abgefackelt werden. Es ist eine Mengenregelung der Methanolzuführung möglich, so daß auch die erzeugte Spaltgas-Endmenge bestimmt werden kann. Von dem Puffergefäß wird im Verhältnis zur benötigten Schutzgasmenge das Spaltgas zudosiert.

Das Verfahren nach der Erfindung ermöglicht es unter sehr geringem apparativen und energetischen Aufwand Schutz- und Reaktionsgase sehr unterschiedlicher Zusammensetzung herzustellen. Wie erwähnt, kann der $CO_2$-Gehalt des Spaltgases verfahrenstechnisch einfach und exakt geregelt werden. Der $H_2$-Anteil steigt bei gleicher Menge Methanol, wie aus der Reaktionsgleichung ersichtlich ist. Verwendet man nun noch mit einer als $CO_2$-Entferner arbeitenden Kühlfalle den kalten Stickstoff aus dem Lagerbehälter, so kann man Teile des $CO_2$ und möglicher Feuchte ausfrieren. Weitere Varianten sind bei Zusatz von Wasser möglich, wobei sich aus den Reaktionsgleichungen folgende Grenzwerte ergeben :

A.0 <u>Ohne $H_2O$</u>

A.1 Der CO-Anteil ist max. 5o % vom $H_2$-Anteil

B.0 <u>Mit $H_2O$</u>

B.1 Der Anteil $H_2O$ zu $CH_3OH$ darf das Verhältnis 1:o,45 nicht übersteigen
(In der Praxis max. o,4 : 1)

B.2 Der $CO_2$-Anteil ist max. 33 % vom $H_2$-Anteil

Die Erfindung umfaßt auch eine Vorrichtung zur Durchführung des Verfahrens, die eine katalytische Methanolspaltvorrichtung und Lagerbehälter für Methanol, für Wasserstoff und für flüssigen Stickstoff umfaßt und die dadurch gekennzeichnet ist, daß dem Stickstoffbehälter ein Umluftverdampfer nachgeschaltet ist, und daß von der den verdampften Stickstoff führenden Leitung ein Teil mittels einer abgezweigten Leitung als Trägergas dem zur Methanolspaltvorrichtung führenden Methanolstrom zugeführt wird, während ein anderer Teil über eine Zweigleitung einer Mischvorrichtung zugeführt wird, an die auch eine weitere Wasserstoff aus dem Lagerbehälter führende Leitung und eine Spaltgas aus der Methanolspaltvorrichtung führende Leitung angeschlossen ist, und die der Einstellung der gewünschten Mengenverhältnisse des zu liefernden Schutz- bzw. Reaktionsgases dient, welches über die angeschlossene Hauptschutzgasleitung und über Zweigleitungen dem Ofen oder den Öfen zugeführt wird, sowie durch einen Wärmetauscher zum Vorwärmen des Methanol-Trägergas-Gemisch, der mittels im Gegenstrom durchfliessendem Spaltgas aus dem fremdbeheizten Methanolspaltreaktor beheizt ist, sowie durch einen weiteren im Leitungsstrang zum Methanolspaltreaktor eingeschalteten ebenfalls fremdbeheizten Wärmetauscher zum Aufheizen des

Methanol-Trägergas-Gemisch auf ca. 27o° bis 3oo° C, welches dem mit Katalysatoren aus CuO, ZnO und/oder C beschickten, eine Betriebstemperatur von 27o° bis 3oo° C aufweisenden Methanolspaltreaktor zugeführt wird.

Weitere Vorrichtungsmerkmale bestehen aus einem weiteren im Leitungsstrang zum Methanolspaltreaktor eingeschalteten ebenfalls fremdbeheizten Wärmetauscher zum Aufheizen des Methanol-Trägergas-Gemischs auf ca. 27o° - 3oo° C, welches dem mit Katalysatoren aus CuO, ZnO und/oder C beschickten, eine Betriebstemperatur von 27o° - 3oo° C aufweisenden Methanolspaltreaktor zugeführt wird sowie ferner aus dem gas-öl- oder strombeheizten Heizaggregat, welches mittels ein Wärmeträgermedium führenden Rohrleitungen mit dem Verdampfungs-Wärmetauscher für das Methanol-Trägergas-Gemisch und mit dem Methanolspaltreaktor in Verbindung steht, und in welche mindestens eine Umwälzpumpe eingeschaltet ist und die in dem weiteren Vorschlag, in den Leitungsstrang vom Methanol-Lagerbehälter zur Methanolspaltvorrichtung eine fördermengenregelbare hydrostatische Pumpe zum dosierten Zufördern des Methanols einzuschalten.

Die Erfindung umfaßt auch die Möglichkeit, beispielsweise in Fällen, bei denen verfügbare Prozeßwärme ausgenutzt werden kann, den Methanolspalter mit Katalysatoren zu beschicken, die den Spaltprozeß am wirtschaftlichsten bei einer höheren Prozeßtemperatur ablaufen lassen, beispielsweise zwischen 4oo bis 5oo° C.

Wenn eine bestimmte Verschiebung des durch die Reaktionsgleichung bestimmten Verhältnisses von Wasserstoff zu Kohlenmonoxyd ermöglicht werden soll, ist die Beimischung

von entsalztem Wasser vorgesehen. Die Vorrichtung hierzu besteht aus einem Lagerbehälter für entsalztes Wasser, an den über eine Leitung eine fördermengenregelbare hydrostatische Pumpe angeschlossen ist, die der dosierten Zuförderung von $H_2O$ über eine Zuführungsleitung in den das Methanol-Trägergas-Gemisch führenden Leitungsstrang dient.

Um die mit der Vorrichtung verfahrensgemäß in weiten Grenzen unterschiedlich wählbaren Mischungsverhältnisse in der Zusammensetzung des gewünschten Schutz- oder Reaktionsgases im laufenden Betrieb einzustellen und dauernd aufrechtzuerhalten, werden nach der weiteren Erfindung einige Meß- und Regelvorrichtungen vorgeschlagen, zum Beispiel, daß in den Leitungsstrang des dem Umluftverdampfer gasförmig entströmenden Trägergas-Stickstoff-Gemisches ein Durchflußmesser und ein Dosierventil zum Einstellen des Mischungsverhältnisses mit dem ebenfalls dosiert aus dem Methanol-Lagerbehälter über die Methanolleitung zugeführten und beigemischten Methanols eingeschaltet ist, und daß die Mischung über einen Zuführungsleitungsstrang zur Methanolspaltvorrichtung weitergeleitet wird, und ferner, daß mittels eines Leitungsstranges und diesen eingeschaltet mittels Durchflußmesser und Dosierventil eine dosierte Menge Sauerstoff oder atmosphärische Luft oder sauerstoffangereicherte Luft in den zur Methanolspaltvorrichtung führenden Zuführungs-Leitungsstrang einspeisbar ist, sowie weiterhin, daß die Ofenatmosphäre mittels in den Öfen angeordneten $O_2$-Meßsonden kontinuierlich überwachbar und mittels eines an diese angeschlossenen Stetigregler über ein Fernsteuer-Dosierventil die Zufuhr von Luft- bzw. Sauerstoff- bzw.

sauerstoffangereicherte Luft aus einer Luftspeiseleitung oder einem Sauerstofflagerbehälter zur Methanolspaltvorrichtung stetig regelbar ist.

Ein weiterer Vorschlag zur Dosiervorrichtung für Methanol und Wasser besteht darin, daß die fördermengenregelbaren hydrostatischen Pumpen zur dosierbaren Mengenförderung von Methanol aus dem Methanollagerbehälter und von entsalztem Wasser aus dem Wasserlagerbehälter von einem gemeinsamen Hauptmotor angetrieben und jeweils mit fernsteuerbaren Servo-Stellantrieben für die Fördermengendosierung versehen sind.

Ein wesentlicher Bestandteil der Vorrichtung zur Durchführung des erfindungsgemäßen Verfahrens besteht noch in der Anordnung und Ausbildung eines stickstoffgekühlten $CO_2$-Entferners, der auch als Trockner arbeitet. Er besteht aus zwei alternierend betriebenen, mittels flüssigem Stickstoff gekühlten Wärmetauschers, denen mittels einer Ventilanordnung das in der Methanolspaltvorrichtung hergestellte, in einem Wärmetauscher handwarm abgekühlte Spaltgas-Trägergas-Gemisch zum Ausfrieren des $CO_2$ wechselweise zuführbar und aus welchen das von $CO_2$ gereinigte Spaltgas-Trägergas-Gemisch über eine Zyklon-Abscheider-Anordnung und über eine weitere Ventilanordnung abführbar und nach Durchlauf im Gegenstrom durch den der Abkühlung des Spaltgas-Trägergas-Gemisches dienenden Wärmetauscher erwärmt in den Schutzgashauptleitungsstrang einspeisbar ist. Weiterhin wird hierzu noch vorgeschlagen, daß aus einem Lagerbehälter flüssiger Stickstoff über eine Leitungs- und Ventilanordnung wechselweise dem einen oder anderen Wärmetauscher zuführbar und mittels einer Leitungsanordnung rückführbar und

in einem Rippenrohr auf Umgebungstemperatur erwärmbar ist, und ferner daß die der Zuführung und der Abführung des flüssigen Stickstoffs zum und vom $CO_2$-Entferner dienenden Leitungs- und Ventilanordnungen in den vom Stickstofflagerbehälter zur Mischvorrichtung führenden Zweig-Leitungsstrang eingeschaltet ist.

Da der jeweils nicht zum $CO_2$-Ausfrieren gekühlte Wärmetauscher gespült werden muß, ist vorgesehen, daß der zum Spülen der Wärmetauscher benötigte gasförmige Stickstoff in einer nach der Rippenrohranordnung aus der Stickstoffrückleitung abgezweigten Leitungs- und Ventilanordnung in den jeweils nicht zum $CO_2$-Ausfrieren betriebenen Wärmetauscher einspeisbar und über den rückführenden Leitungsstrang abführbar ist.

Zur Steuerung des $CO_2$-Entferners wird erfindungsgemäß vorgeschlagen, diese von einer gewählten Ausfrier-Temperatur des Spaltgas-Trägergas-Gemisches abhängig zu machen, und zu diesem Zweck ist die Anordnung so getroffen, daß in den das von $CO_2$ gereinigte Spaltgas-Trägergas-Gemisch abführendenn Leitungsstrag eine Meß- und Regelvorrichtung eingeschaltet ist, mittels welcher in Abhängigkeit von der gemessenen Gemischtemperatur über eine Stellanordnung ein in die Stickstoff-Rückleitung eingeschaltetes Regelventil betätigbar ist, durch welches die in der Rückleitung geführte jeweilige Ausflußmenge an Kühl-Stickstoff aus den Wärmetauschern steuerbar ist.

-17-

In der Zeichnung sind das Verfahren und die Vorrichtung nach der Erfindung anhand von Ausführungsbeispielen schematisch veranschaulicht. Es zeigen :

Fig. 1 eine Anordnung mit Fließschema der Einrichtung zum Herstellen von halbsynthetischen Schutzgasen für verschiedene Stahlbehandlungszwecke;

Fig. 2 eine Ausbildung mit Fließschema der Methanolspaltvorrichtung gem. Fig. 1;

Fig. 3 eine Anordnung mit Fließschema der Einrichtung zum Herstellen von halbsynthetischen Schutzgasen in einer erweiterten Ausführung mit einem $CO_2$-Entferner;

Fig. 4 eine Ausbildung mit Fließschema des $CO_2$-Entferners gem. Fig. 3.

Die in Fig. 1 dargestellte Anlage besteht aus dem Stickstofflagerbehälter 1 mit dem angeschlossenen Umluftverdampfer 2 und dem Wasserstofflagerbehälter 11, sowie dem Methanollagerbehälter 21. Von diesem wird das Methanol über Leitung 22 der Methanolspaltvorrichtung 31 zugeführt. Der im Umluftverdampfer

2 auf min. Umlufttemperatur erwärmte und in Leitung 3 geführte Stickstoff wird im wesentlichen in der Leitung 4 mit zwischengeschalteter Druckmindervorrichtung 5 der Mischvorrichtung 41 zugeführt, und es wird ferner in Leitung 6 ein kleinerer Anteil $N_2$ abgezweigt und als Trägergas für das Methanol ebenfalls der Methanolspaltvorrichtung zugeführt.

Diese Methanolspaltvorrichtung 31 ist in Fig. 2 näher dargestellt und in dem zugehörigen Beschreibungsteil erläutert.

In der Mischvorrichtung 41, der über Leitung 4 $N_2$ und über Leitung 12 $H_2$ zugeführt wird, wird das gewünschte Mischungsverhältnis zwischen dem $N_2$- und $H_2$- Gehalt des herzustellenden Schutz- bzw. Reaktionsgases eingestellt und mit dem Spaltgas, bestehend aus Wasserstoff, Kohlenmonoxyd, Kohlendioxyd und Stickstoff gemischt.

Im folgenden sind hierzu einige Ausführungsbeispiele beschrieben:

Beispiel A:

Es soll zum Weichglühen von kaltgewalztem Stahl 345 $Nm^3/h$ Schutzgas bestehend aus ca. 320 $Nm^3/h$ Stickstoff (ca. 93%), ca. 7 Nm/h Wasserstoff (ca. 6%), ca. 3,5 $Nm^3/h$ Kohlenmonoxyd (ca. 0,9%) und ca. 0,5 $Nm^3/h$ Kohlendioxyd (0,1%) zur Verfügung gestellt werden. Aus dem Stickstofflagerbehälter 1 werden ca. 320 $Nm^3/h$ im Verdampfer 2 auf Umlufttemperatur erwärmt. Dem Verdampfer 2 nachgeschaltet werden ca. 15 $Nm^3/h$ Stickstoff als Trägergas für die Methanolspaltung über die Leitung 6 von der Stickstoffzuführung (Leitungen 3, 4) zur Mischvorrichutng 41 abgezweigt.

Bei einer Methanolzuführung von ca. 6,3 l/h Methanol wird in der Methanolspaltvorrichtung 31 ein Spaltgasgemisch produziert, welches enthält etwa

| | | |
|---|---|---|
| 7 | $Nm^3/h$ | Wasserstoff |
| 3,5 | $Nm^3/h$ | Kohlenmonoxyd |
| 0,5 | $Nm^3/h$ | Kohlendioxyd |
| 15 | $Nm^3/h$ | Stickstoff |

Dieses in der Leitung 32 geführte Spaltgas wird dann dem in der Mischvorrichtung 41 hergestellten Gasgemisch aus ca. 305 $Nm^3/h$ Stickstoff und ca. 15 $Nm^3/h$ aus einer Leitung 61 zugegeben und in der Hauptschutzgasleitung 62 zu den Glühöfen geführt, beispielsweise in Leitung 63 zum Glühofen 91.

Die in Fig. 2 mit ihrem Fließschema dargestellte Methanolspaltvorrichtung arbeitet als katalytisches Methanolspaltverfahren zur Herstellung des Spaltgases Kohlenmonoxyd und Wasserstoff. Die Vorrichtung arbeitet nach dem erfindungsgemäßen Verfahren über einen sehr langen Zeitraum betriebssicher und ohne Standzeiten. Außerdem kann durch gezielt Zugabe von gebundenem Sauerstoff das Verhältnis $CO:CO_2$ eingestellt werden.

Das im folgenden erläuterte Methanolspaltverfahren arbeitet mit einem dem Methanol beigegebenen Trägergas; im dargestellten Beispiel ist das Trägergas Stickstoff. Es können auch andere Trägergase, z.B. ein Gemisch aus $H_2$ und $CO_2$ verwendet werden.

Der Stickstoff als Trägergas wird in der Leitung 6 über den Durchflußmesser 7 und das Dosierventil 8 zusammen mit dem Methanol aus Leitungen 22, 27 über Leitung 9 zum Erwärmen auf etwa 60°C dem

Wärmetauscher 33 zugeführt. Der Wärmetauscher 33 wird durch das nach der Reaktion im Reaktor 31 gebildete Gemisch aus Spaltgas und Trägergas - Leitung 34 - aufgeheizt, und das Spaltgas-Trägergas-Gemisch verläßt abgekühlt die Vorrichtung über Leitung 32 etwa handwarm.

In die Leitungen 22, 27 ist die Dosierpumpe 25 eingeschaltet, die vom Hauptmotor 24 angetrieben und mit einem mit M bezeichneten Servoantrieb versehen ist, um eine programmgesteuerte Dosierung zu ermöglichen.

Das auf etwa 60°C vorgewärmte Methanol-Trägergas-Gemisch gelangt über Leitung 39 in den Wärmetauscher 35, wo es durch Aufheizen auf ca. 270°C verdampft und darauf zum Röhrenreaktor 31 geleitet wird. Der Wärmetauscher 35 ist durch den Heizkreislauf 36, 37, 38, an den auch der Röhrenreaktor 31 angeschlossen ist, fremdbeheizt. Im Ausführungsbeispiel dient ein Wärmeträgeröl als Heizmedium, welches im Heizaggregat 38 elektrisch beheizt und mittels der Umwälzpumpe 37 im Leitungskreislauf 36 umgepumpt wird. Dabei ist die Dimensionierung so auszulegen, daß zwischen Ölvorlauf und -rücklauf eine Temperaturschwankung von max. 5°C auftritt.

Im Röhrenreaktor 31,der durch den beschriebenen Heizkreislauf auf einer Temperatur von 270°C gehalten wird, erfolgt die katalytische Spaltung des auf 270°C aufgeheizten Methanol-Trägergas-Gemischs in CO und $H_2$. Als Katalysator haben sich Tabletten aus CuO, ZnO und C bewährt.

Wenn für bestimmte Schutzgase $CO_2$ anstelle eines Teils CO im Spaltgas-Trägergas-Gemisch hergestellt werden soll, so wird dem Methanol-Trägergas-Gemisch entsalztes Wasser, Luft oder Sauerstoff beigegeben. Das entsalzte Wasser wird einem nicht dargestellten Wasserbehälter entnommen und über die Leitungen 23, 26 und die Dosierpumpe 28 in die Leitung 29 eingespeist, die das Methanol-Trägergas-Gemisch zum Reaktor zuführt. Hierbei erhöht sich der Wasserstoffanteil im Spaltgas. Die $H_2O$-Zugabe kann bis zu 0,45 l pro 1 l Methanol betragen.

Dabei ist im Ausführungsbeispiel die Anordnung so getroffen, daß bei der Dosierpumpenanordnung 24, 25, 28 durch Hubverstellung des Pumpenkopfes 28 das Mengenverhältnis CO zu $CO_2$ beeinflußt wird, während durch Drehzahländerung beider Pumpenköpfe 25, 28 die Spaltgasmenge angepaßt werden kann.

Ferner ist eine weitere Anordnung für die Zugabe von Luft oder Sauerstoff vorgesehen, die über Leitung 51, Durchflußmesser 52 und Dosierventil 53 erfolgt, und die über Leitung 54 ebenfalls in die Leitung 9 eingespeist werden kann. Dadurch erhöht sich der Wasserstoffanteil im Spaltgas nicht. Auch hier kann durch entsprechendes Dosieren das $CO/CO_2$-Verhältnis feingesteuert werden.

Die Anordnung mit Fließschema gem. Fig. 3 stellt eine gegenüber Fig. 1 erweiterte Ausführung dar. Die Lagerbehälter tragen die Bezeichnungen 1 für Stickstoff, 11 für Wasserstoff, 21 für Methanol und 30 für entsalztes Wasser. Das Methanol gelangt über die Leitungen 22, 27 in die Methanolspaltvorrichtung 31, 33, 35 - siehe Fig. 1 und 2 - und ebenso wird entsalztes Wasser über Leitungen 23, 26 und Stickstoff über Leitungen 3 und 6 der Methanolspaltvorrichtung 31, 33.35 zugeführt.

Außerdem ist- in Übereinstimmung mit der Vorrichtung gem. Fig.2 - die Zuführung von Luft über Leitung 17 bzw. Sauerstoff aus dem Sauerstofflagerbehälter 15 über Leitung 16 und Dosierventil 18 vorgesehen.

Die Einzelheiten der Methanolspaltvorrichtung 31, 33, 35 gehen aus Fig. 2 und der zughörigen Beschreibung hervor.

Wie weiter ersichtlich ist, gelangt aus dem entsprechenden Lagerbehälter 1 flüssiger Stickstoff über Leitung 42 in den $CO_2$-Entferner 70 als Kühlmittel für die Wärmetauscher - siehe Fig.4 - sowie über den Umluftverdampfer 3 und Leitung 5 als gasförmiger Stickstoff in die Mischvorrichtung 41, wie auch aus Fig. 1 hervorgeht.

Die Anordnung ermöglicht über einige Regelschaltkreise die stetig gleichbleibende Zusammensetzung eines einmal eingestellten Mischungsverhältnisses des jeweils gewünschten Schutz- bzw. Reaktionsgases, wie z.B. in Abhängigkeit von der Ofenatmosphäre 91 mittels der $O_2$-Meßsonde und des Stetigreglers 94, durch den die Luft bzw. Sauerstoffbeimischung überwacht und gesteuert wird. Ferner wird über Meßsonden in der Leitung 61 die Stickstoff-und Wasserstoffzugabe aus der Mischvorrichtung 41, und in der Leitung 48 die Spaltgas-Trägergas-Menge dauernd überwacht und mittels Regelventil 49 gesteuert, und ferner über Leitung 51 eine Mengensteuerung der Methanolpumpe (25 in Fig.2) bewirkt.

Die Arbeitsweise dieser Anordnung wird anhand des Beispiels B erläutert:

Es soll ein Schutzgas zum Weichglühen von kaltgewalztem Stahl hergestellt werden, und zwar wird der flüssige Stickstoff (ca. 320 $Nm^3$) aus Lagerbehälter 1 im Verdampfer 2 verdampft und auf min. Umlufttemperatur erwärmt. Dem Verdampfer 2 nachgeschaltet werden ca. 30 $Nm^3/h$ Stickstoff als Trägergas entnommen und über Leitung 6 der Methanolspaltvorrichtung 31, 33, 35 zugeführt und ferner werden ca. 14,7 l/h Methanol über Leitung 22, 27 und ca. 3,81 l/h entsalztes Wasser über Leitung 23 zugegeben.

Die Spaltvorrichtung produziert an Gemisch ca.:

| | | |
|---|---|---|
| 21 | $Nm^3/h$ | Wasserstoff |
| 3,5 | $Nm^3/h$ | Kohlenmonoxyd |
| 4,7 | $Nm^3/h$ | Kohlendioxyd |
| 30 | $Nm^3/h$ | Stickstoff |

Dieses Gasgemisch wird über Leitung 32, 42 in den $CO_2$-Entferner 70 geleitet. Es verläßt den $CO_2$-Entferner mit folgender Gasgemischzusammensetzung:

| | | |
|---|---|---|
| 21 | $Nm^3/h$ | Wasserstoff |
| 3,5 | $Nm^3/h$ | Kohlenmonxyd |
| ca. 0,5 | $Nm^3/h$ | Kohlendioxyd |
| 30 | $Nm^3/h$ | Stickstoff |

Das nahezu kohlendioxyd-freie Spaltgas aus Leitung 47 wird dann dem Stickstoff aus Leitung 61 zugegeben und in die Hauptschutzgasleitung geleitet.

Treten größere oder schnellere Schutzgasmengenschwankungen auf, die nicht selbsttätig durch eine Anpassung der Methanol-Wasser-Menge reguliert werden können, tritt der Puffer 46 in Funktion. Über die Verhältnisregelung 49, 50 kann nun die Gaszusammensetzung gesteuert werden.

In Fig. 4 ist die Ausbildung mit Fließschema des $CO_2$-Entferners 70 gem. Fig. 3 dargestellt, der zu einem wechselseitigen diskontuierlichen Betrieb als Doppel-Kühlfalle ausgelegt ist und der auch als Trockner eingesetzt wird.

Das Spaltgas-Trägergas wird dem $CO_2$-Entferner 70 in Leitung 32 (siehe Fig. 1 bis 3) etwa handwarm über den Wärmetauscher 88 zugeführt, in dem eine Vorkühlung erfolgt, um dann über Leitungen 71, 72 wechselweise in die Wärmetauscher 90a, 90b eingeleitet zu werden, in denen durch Abkühlen im Gegenstrom auf etwa -100°C das $CO_2$ ausgefroren wird, welches sich verflüssigt und nach Überleitung in die beiden Zyklon-Abscheider 85 über die Leitungen 89 abgeführt wird. Das von $CO_2$ getrennte Spaltgas-Trägergas-Gemisch gelangt dann über Leitungen 74, 75 als Kühlmedium in den erwähnten Wärmetauscher 88, von wo es erwärmt über Leitung 47 in die Hauptschutzgasleitung 62 (siehe Fig. 1 und 3) überführt wird.

Als Kühlmedium wird den Wärmetauschern 90a, 90b flüssiger Stickstoff von - 196°C aus Leitung 43 (siehe Fig. 3) über Leitung 78 zugeführt und über Leitungen 79, 80 wieder abgeführt. Vor der Überführung in Leitung 44 zur Mischvorrichtung 41 (Fig. 3) durchströmt er ein Rippenrohr 80a, wo eine Erwärmung auf Umgebungstemperatur erfolgt.

Um ein Zufrieren der Wärmetauscher 90a, 90b zu vermeiden, werden diese alternierend, d.h. wechselseitig betrieben. Während in dem einen Wärmetauscher mit flüssigem Stickstoff ausgefroren wird, erfolgt die Spülung des anderen Wärmetauschers mit im Rippenrohr 80a erwärmtem, in Leitung 44a zugeführtem Stickstoffgas von etwa Raumtemperatur.

Das in Leitung 75 geführte, von $CO_2$ gereinigte Spaltgas-Trägergas-Gemisch durchläuft die Meß-und Regelvorrichtung 76, mit welcher in Abhängigkeit von der Gemischtemperatur die aus dem jeweiligen Wärmetauscher 90a, 90b austretende Stickstoffmenge geregelt wird.

Durch die wechselseitige Beaufschlagung mit Spaltgas-Trägergas-Gemisch und die Freispülung der beiden Spiral-oder Doppelrohr-Wärmetauscher 90a, 90b wird eine ununterbrochene,nahezu kontinuierliche und sehr betriebssichere $CO_2$-Abscheidung gewährleistet. Etwa auftretende geringfügige Durchflußschwankungen können in einem Puffer, beispielsweise siehe Fig. 3 Puffer 46, ausgeglichen werden.

Der Wechselbetrieb wird durch eine selbsttätig pneumatisch oder magnetisch gesteuerte Ventilanordnung bewirkt. Wenn der Wärmetauscher 90a in Betrieb ist, sind die diesem zugeordneten Ventile 81, 83 und 84 geöffnet und die Ventile 82 und 86 geschlossen. Gleichzeitig befinden sich die dem Wärmetauscher 90b zugeordneten Ventile in umgekehrter Stellung.

Dadurch wird das zu behandelnde Spaltgas-Trägergas-Gemisch aus Leitung 71 über 72 dem Wärmetauscher 90a zugeführt und über 73, 74, 75 wieder abgeführt. Gleichzeitig wird über Leitung 44a und 77 (bei geöffnetem Ventil 82) Spül-Stickstoff in den Wärmetauscher 90b eingeführt und gelangt über Leitung 73, Abscheider 85 und geöffnetes Ventil 86 und über Leitung 89 - zusammen mit dem ausgefrorenen $CO_2$ - aus dem System. Durch Umschaltung der Ventilstellungen wird die Arbeitsweise der beiden Wärmetauscher umgekehrt.

Wenn eine Verfahrensweise zur Herstellung eines Schutzgases durchgeführt wird, welche ohne $CO_2$-Entfernung arbeitet, dann werden die vom $N_2$-Lagerbehälter 1 (Fig.3) abzweigende, flüssigen Stickstoff führende Leitung 43 und die Stickstoff-Rückleitung 44 wie auch Trägergas-Spaltgas-Gemisch führenden Leitungen 42, 47 abgeschaltet.

Eine solche Betriebsweise wird im nachfolgend beschriebenen Verfahrensbeispiel C benutzt, um ein Reaktionsgas zum Entkohlen von Transformatorenblechen herzustellen.

Der flüssige Stickstoff (ca. 40 $Nm^3/h$) aus dem Lagerbehälter 1 wird im Verdampfer 2 auf Umlufttemperatur erwärmt, siehe Fig. 1 und 3. Dem Umluftverdampfer 2 nachgeschaltet wird über Leitung 6 ca. 15$Nm^3/h$ Stickstoff als Trägergas entnommen und zusammen mit ca. 8,5 l/h Methanol aus dem Lagerbehälter 21 über Leitungen 22, 27 und ca. 3,81 l/h entsalztes Wasser aus dem Lagerbehälter 30 über Leitungen 23, 26 (Fig. 2 und 3) der Methanolspaltvorrichtung 31, 33, 35 zugeführt. Diese produziert eine Gasgemisch aus

| | | |
|---|---|---|
| 14 | $Nm^3/h$ | Wasserstoff |
| 0,5 | $Nm^3/h$ | Kohlenmonoxyd |
| 4,7 | $Nm^3/h$ | Kohlendioxyd |
| 15 | $Nm^3/h$ | Stickstoff |

Dieses Gemisch wird über die Leitung 32 dem Stickstoffgas im Hauptschutzgasleitungsstrang 61, 62 beigemischt. Bei diesem Verfahren treten Mengenschwankungen kaum auf; im Falle eines geringfügigen Auftretens von Mengenschwankungen können diese durch manuelles Ausgleichsregeln beseitigt werden.

Mit einem weiteren Verfahrensbeispiel D kann ein Reaktionsgas zur Einsatzhärtung von Stahl dargestellt werden. Hierzu werden benötigt Stickstoff aus Lagerbehälter 1 mit nachgeschalteten Umluftverdampfer 2, Methanol aus Lagerbehälter 21, Sauerstoff

aus Lagerbehälter 15 (ersatzweise auch Luftanschluß 6a) - siehe Fig. 3 -sowie die Methanolspaltvorrichtung 31, 33, 35. Wenn das C-Potential im Reaktionsgas gesteuert werden soll, wird die $O_2$ - Sonde 92 mit der Stetigregler-Anordnung 93, 94 eingeschaltet.

Das Verfahren besteht darin, daß ca. 55 $Nm^3/h$ aus dem Lagerbehälter 1 im Umluftverdampfer auf min. Umlufttemperatur erwärmt und in der Gesamtmenge der Methanolspaltvorrichtung 31, 33, 35 zusammen mit 27 l/h Methanol zugeführt wird. Diese produziert ein Gasgemisch aus

| | | | |
|---|---|---|---|
| ca. 15 % | Kohlenmonoxyd | = ca. | 15 $Nm^3/h$ |
| ca. 30 % | Wasserstoff | = ca. | 30 $Nm^3/h$ |
| ca. 55 % | Stickstoff | = ca. | 55 $Nm^3/h$ |

Mittels der Sauerstoff-Sonde 92 im Ofen (91) kann das C-Potential errechnet werden, und über die Stetig-Regelanordnung 93, 94 wird die Luft bzw. $O_2$-Menge angepaßt und das C-Potential auf den gewünschten Wert gebracht. Dies geschieht dadurch, daß dem Methanolspalter 31 über das Dosierventil 18 und Leitung 19 eine entsprechend bemessene Menge Luft oder Sauerstoff zugeführt wird, wodurch sich entsprechend die Kohlenmonoxydmenge verringert und sich Kohlendioxyd bildet.

Das so hergestellte Reaktionsgasgemisch wird ohne weitere Aufarbeitung den Öfen in der Einsatz-Härterei zugeführt.

0155477

Stephan Peter Nicolai
Am Neuen Busch 2
423o Wesel 13

4252 - A.

Verfahren zur Herstellung von halbsynthetischen Schutz- und Reaktionsgasen, insbesondere zur Wärmebehandlung von Stahl- und Metallwerkstoffen, bestehend aus einer Mischung unterschiedlich wählbarer Mengen von Stickstoff Wasserstoff, Kohlenmonoxyd, Kohlendioxyd sowie Wasserdampf

P a t e n t a n s p r ü c h e

1. Verfahren zur Herstellung von halbsynthetischen Schutz- und Reaktionsgasen zur Wärmebehandlung von Stahl- und Metallwerkstoffen, bestehend aus einer Mischung unterschiedlich wählbarer Mengen von Stickstoff, Wasserstoff, Kohlenmonoxyd, Kohlendioxyd sowie Wasserdampf,
dadurch gekennzeichnet,
daß dem Stickstoffgas oder einem Stickstoff-Wasserstoff-Gasgemisch die mittels katalytischen Methanolspaltung gewonnenen Spaltgase Wasserstoff und Kohlenmonoxyd sowie Kohlendioxyd zugemischt werden, und daß dem zugeführten, in einem weiten Bereich mengenregelbaren Methanol als Wärmetransportmittel wirkendes vorgewärmtes Stickstoffgas als Trägergas zugemischt und dieses Gemisch dann in ein Verdampfergefäß (35) gedrückt und dort bei einer

Temperatur von 27o$^{o}$ bis 3oo$^{o}$ C vollständig verdampft wird, und daß darauf das Methanoldampf-Stickstoffgas-Gemisch mit seiner Temperatur von 27o$^{o}$ bis 3oo$^{o}$ C in einem mit einem Katalysator gefüllten Reaktor (31) bei einer dauernd aufrechterhaltenen Prozeßtemperatur von 27o - 3oo$^{o}$ C zu hauptsächlich CO und $H_2$ gespalten wird, und daß die Spaltgase vor der Zumischung zum Herstellen des Schutz- und Reaktionsgases einen Wärmetauscher (33) zur Vorwärmung des Trägergases durchlaufen und dabei auf ca. 6o$^{o}$ C abgekühlt werden. (Fig. 1 und 2)

2. Verfahren nach Anspruch 1
dadurch gekennzeichnet,
daß zum Ausgleich zwischen Schutzgasmengenschwankungen und dem Anfall an Spaltgas dieses in einen Puffer (46) eingespeist wird, von dem aus das Spaltgas im vorgesehenen Verhältnis zur Schutz- bzw. Reaktionsgasmenge dosiert, kontinuierlich analysiert und bei Regelabweichung das Mengenverhältnis selbsttätig korrigiert wird.

3. Verfahren nach Anspruch 1
dadurch gekennzeichnet,
daß dem Methanol vor der Zuführung des Träger-Stickstoffes eine in Abhängigkeit von dem gewünschten Wasserstoff-Anteil im Spaltgas zudosierbare Menge von entsalztem Wasser beigemischt wird.

4. Verfahren nach Anspruch 1
dadurch gekennzeichnet,
daß dem Methanol vor der Zuführung des Träger-Stickstoffes eine in Abhängigkeit von dem gewünschten Dioxyd-Anteil im Spaltgas zudosierbare Menge von Luft und Sauerstoff beigemischt wird.

5. Verfahren nach Anspruch 1
dadurch gekennzeichnet,
daß mittels eines im Kreislauf geführten fremdbeheizten Wärmeträgermediums der Verdampfer (35) für das auf 6o° C vorgewärmte Methanol-Trägergas-Gemisch sowie das Reaktorgefäß (31) auf ca. 28o° C aufgeheizt wird, und daß sich die Temperaturschwankung zwischen Vor- und Rücklauf des Wärmeträgermediums nicht über 5° C erhöht.

6. Verfahren nach Anspruch 1 und einem oder mehreren der folgenden Ansprüche
dadurch gekennzeichnet,
daß zur $CO_2$-Entfernung in den Verfahrensablauf eine aus zwei alternierend zu- und abschaltbaren Wärmetauscher (9oa, 9ob) bestehende, mit flüssigem Stickstoff betriebene Kühlfalle eingesetzt wird, der in dem ersten Wärmetauscher (9oa) dem Spalt-Rohgas entgegenströmt und je nach Austrittstemperatur des Spaltgases das Kohlendioxyd ausfriert, wobei der flüssige Stickstoff verdampft und dem Hauptstickstoffstrom wieder zugeführt wird, und wobei ferner während des Zufrierens des ersten Wärmetauschers (9oa) der zweite abgeschaltete Wärmetauscher (9ob) mit dem vorgewärmten Stickstoff getrocknet wird und nach Umschalten auf den zweiten Wärmetauscher (9ob) dieser zugefroren und der erste abgeschaltete Wärmetauscher (9oa) getrocknet wird.

7. Vorrichtung zur Durchführung des Verfahrens nach Anspruch 1 und einem oder mehreren der folgenden Ansprüche bestehend aus einer katalytischen Methanolspaltvorrichtung und Lagerbehältern für Methanol, für Wasserstoff und für flüssigen Stickstoff
gekennzeichnet dadurch,

daß dem Stickstoffbehälter (1) ein Umluftverdampfer (2) nachgeschaltet ist, und daß von der den verdampften Stickstoff führenden Leitung (3) ein Teil mittels einer abgezweigten Leitung (6) als Trägergas dem zur Methanolspaltvorrichtung (31, 32, 33) führenden Methanolstrom (22, 27) zugeführt wird, während ein anderer Teil über eine Zweigleitung (4) einer Mischvorrichtung (41) zugeführt wird, an die auch eine weitere Wasserstoff aus dem Lagerbehälter (11) führende Leitung (12) und eine Spaltgas aus der Methanolspaltvorrichtung führende Leitung (32) angeschlossen ist, und die der Einstellung der gewünschten Mengenverhältnisse des zu liefernden Schutz- bzw. Reaktionsgases dient, welches über die angeschlossene Hauptschutzgasleitung (61, 62) und über Zweigleitungen (63) dem Ofen oder den Öfen (91) zugeführt wird, sowie durch einen Wärmetauscher (33) zum Vorwärmen des Methanol-Trägergas-Gemisch (9, 26), der mittels im Gegenstrom durchfließendem Spaltgas (34) aus dem fremdbeheizten Methanolspaltreaktor (31) beheizt ist, sowie durch einen weiteren im Leitungsstrang (39) zum Methanolspaltreaktor (31) eingeschalteten ebenfalls fremdbeheizten Wärmetauscher (35) zum Aufheizen des Methanol-Trägergas-Gemisch auf ca. 27o$^{0}$ bis 3oo$^{0}$ C, welches dem mit Katalysatoren aus CuO, ZnO und/oder C beschickten, eine Betriebstemperatur von 27o$^{0}$ bis 3oo$^{0}$ C aufweisenden Methanolspaltreaktor (31) zugeführt wird. (Fig. 2, 3)

8. Vorrichtung nach Anspruch 7
gekennzeichnet
durch einen Wärmetauscher (33) zum Vorwärmen des Methanol-Trägergas-Gemischs (9, 26), der mittels im Gegenstrom durchfließendem Spaltgas (34) aus dem fremdbeheizten Methanolspaltreaktor (31) beheizt ist, sowie durch

einen weiteren im Leitungsstrang (39) zum Methanolspaltreaktor (31) eingeschalteten ebenfalls fremdbeheizten Wärmetauscher (35) zum Aufheizen des Methanol-Trägergas-Gemischs auf ca. 27o° bis 3oo° C, welches dem mit Katalysatoren aus CuO, ZnO und/oder C beschickten, eine Betriebstemperatur von 27o° bis 3oo° C aufweisenden Methanolspaltreaktor (31) zugeführt wird.

9. Vorrichtung nach Anspruch 7
dadurch gekennzeichnet,
daß in den Leitungsstrang (22, 27) vom Methanol-Lagerbehälter (21) zur Methanolspaltvorrichtung (31, 33, 35) eine fördermengenregelbare hydrostatische Pumpe (25) zum dosierten Zufördern des Methanols und in den Leitungsstrang (23) vom Lagerbehälter (3o) für entsalztes Wasser eine weitere fördermengenregelbare hydrostatische Pumpe (28) eingeschaltet ist, die der dosierten Zuförderung von $H_2O$ über eine Zuführungsleitung (26) in den das Methanol-Trägergas-Gemisch führenden Leitungsstrang (9, 27) dient.

1o. Vorrichtung nach Anspruch 7
dadurch gekennzeichnet,
daß in den Leitungsstrang (3, 6) des dem Umluftverdampfer (2) gasförmig entströmenden Trägergas-Stickstoff-Gemisches ein Durchflußmesser (7) und ein Dosierventil (8) zum Einstellen des Mischungsverhältnisses mit dem ebenfalls dosiert aus dem Methanol-Lagerbehälter (21) über die Methanolleitung (22, 27) zugeführten und beigemischten Methanols eingeschaltet ist, und daß die Mischung über einen Zuführungs-Leitungsstrang (29) zur Methanolspaltvorrichtung (31, 33, 35) weitergeleitet wird.

11. Vorrichtung nach Anspruch 7
dadurch gekennzeichnet,
daß mittels eines Leitungsstranges (51, 54) und diesen eingeschaltet mittels Durchflußmesser (52) und Dosierventil (53) eine dosierte Menge Sauerstoff oder atmosphärische Luft oder sauerstoffangereicherte Luft in den zur Methanolspaltvorrichtung (31, 33, 35) führenden Zuführungs-Leitungsstrang (29) einspeisbar ist.

12. Vorrichtung nach Anspruch 11
dadurch gekennzeichnet,
daß die Ofenatmosphäre mittels in den Öfen (91) angeordneten $O_2$-Meßsonden (92) kontinuierlich überwachbar und mittels eines an diese angeschlossenen Stetigregler (94) über ein Fernsteuer-Dosierventil (18) die Zufuhr von Luft- bzw. Sauerstoff- bzw. sauerstoffangereicherte Luft aus einer Luftspeiseleitung (17) oder einem Sauerstofflagerbehälter (15, 16) zur Methanolspaltvorrichtung (31, 33, 35) stetig regelbar ist.

13. Vorrichtung nach Anspruch 7 und einem oder mehreren der folgenden Ansprüche
gekennzeichnet
durch eine Mischvorrichtung (41) die zum Mischen des Spaltgases (32) mit dem mit vermindertem Druck (5) zugeführten Stickstoffgas unter Zumischung des ebenfalls druckverminderten (13) Wasserstoffgases dient, an die der zur Schutzgashauptleitung (62) führende Leitungsstrang (61) angeschlossen ist, und daß in den das Spaltgas aus dem Methanolspaltreaktor (31, 33, 35) der Mischvorrichtung (41) zuführenden Leitungsstrang (32, 42) ein $CO_2$-Entferner (7o) eingeschaltet ist, der mittels einer vor dem Umluftverdampfer (2) abzweigenden Leitungszuführung (43) den zum Betrieb erforderlichen

flüssigen Stickstoff aus dem Stickstofflagerbehälter (1) erhält, welcher als gasförmiger Stickstoff aus dem $CO_2$-Entferner (7o) über eine Zuführungsleitung (44) wieder über die Mischvorrichtung (41) in den Kreislauf eingeleitet wird.

14. Vorrichtung nach Anspruch 13
dadurch gekennzeichnet,

daß mittels Meßsonden (5o), die in den Schutzgashaupt-Leitungsstrang (61, 62) und in den aus dem $CO_2$-Entferner abführenden, $CO_2$-gereinigtes Spaltgas-Trägergas führenden Leitungsstrang (47) eingeschaltet sind, die enthaltenen Mengen an Stickstoff und Wasserstoff sowie die aus dem $CO_2$-Entferner abgegebenen Spaltgas-Trägergas-Mengen dauernd meßbar sind, und daß in Abhängigkeit von den Meßergebnissen mittels einer Regelanordnung (49) die Mengenförderung der Methanolförderpumpe (25) steuerbar ist.

15. Vorrichtung nach Anspruch 7 und 13
dadurch gekennzeichnet,

daß der $CO_2$-Entferner aus zwei alternierend betriebenen, mittels flüssigem Stickstoff gekühlter Wärmetauschern (9oa, 9ob) besteht, denen mittels einer Ventilanordnung (81) das in der Methanolspaltvorrichtung (31, 33, 35) hergestellte, in einem Wärmetauscher (88) handwarm abgekühlte Spaltgas-Trägergas-Gemisch zum Ausfrieren des $CO_2$ wechselweise zuführbar und aus welchen das von $CO_2$ gereinigte Spaltgas-Trägergas-Gemisch über eine Zyklon-Abscheider-Anordnung (85) und über eine weitere Ventilanordnung (84) abführbar und nach Durchlauf im Gegenstrom durch den der Abkühlung des Spaltgas-Trägergas-Gemisches dienenden Wärmetauscher (88) erwärmt in den Schutzgashauptleitungsstrang (61, 62) einspeisbar ist, und daß aus einem Lagerbehälter (1) flüssiger Stickstoff über eine Leitungs- und Ventilanordnung (78, 83) wechselweise dem einen oder anderen Wärmetauscher (9o, 9ob) zuführbar und mittels einer Leitungsanordnung (79, 8o) rückführbar und in einem Rippenrohr (8oa) auf Umgebungstemperatur erwärmbar ist.

16. Vorrichtung nach Anspruch 15
dadurch gekennzeichnet,
daß der zum Spülen der Wärmetauscher (9oa, 9ob) benötigte gasförmige Stickstoff in einer nach der Rippenrohranordnung (8oa) aus der Stickstoffrückleitung (44) abgezweigten Leitungs- und Ventilanordnung (44a, 77, 82) in den jeweils nicht zum $CO_2$-Ausfrieren betriebenen Wärmetauscher (9oa oder 9ob) einspeisbar und über den rückführenden Leitungsstrang (73, 71, 75) abführbar ist.

17. Vorrichtung nach den Ansprüchen 15 und 16
dadurch gekennzeichnet,
daß in den das von $CO_2$ gereinigte Spaltgas-Trägergas-Gemisch abführenden Leitungsstrang (75) eine Meß- und Regelvorrichtung (76) eingeschaltet ist, mittels welcher in Abhängigkeit von der gemessenen Gemischtemperatur über eine Stellanordnung ein in die Stickstoff-Rückleitung (8o) eingeschaltetes Regelventil (76a) betätigbar ist, durch welches die in der Rückleitung geführte jeweilige Ausflußmenge an Kühl-Stickstoff aus den Wärmetauschern (9oa, 9ob) steuerbar ist.

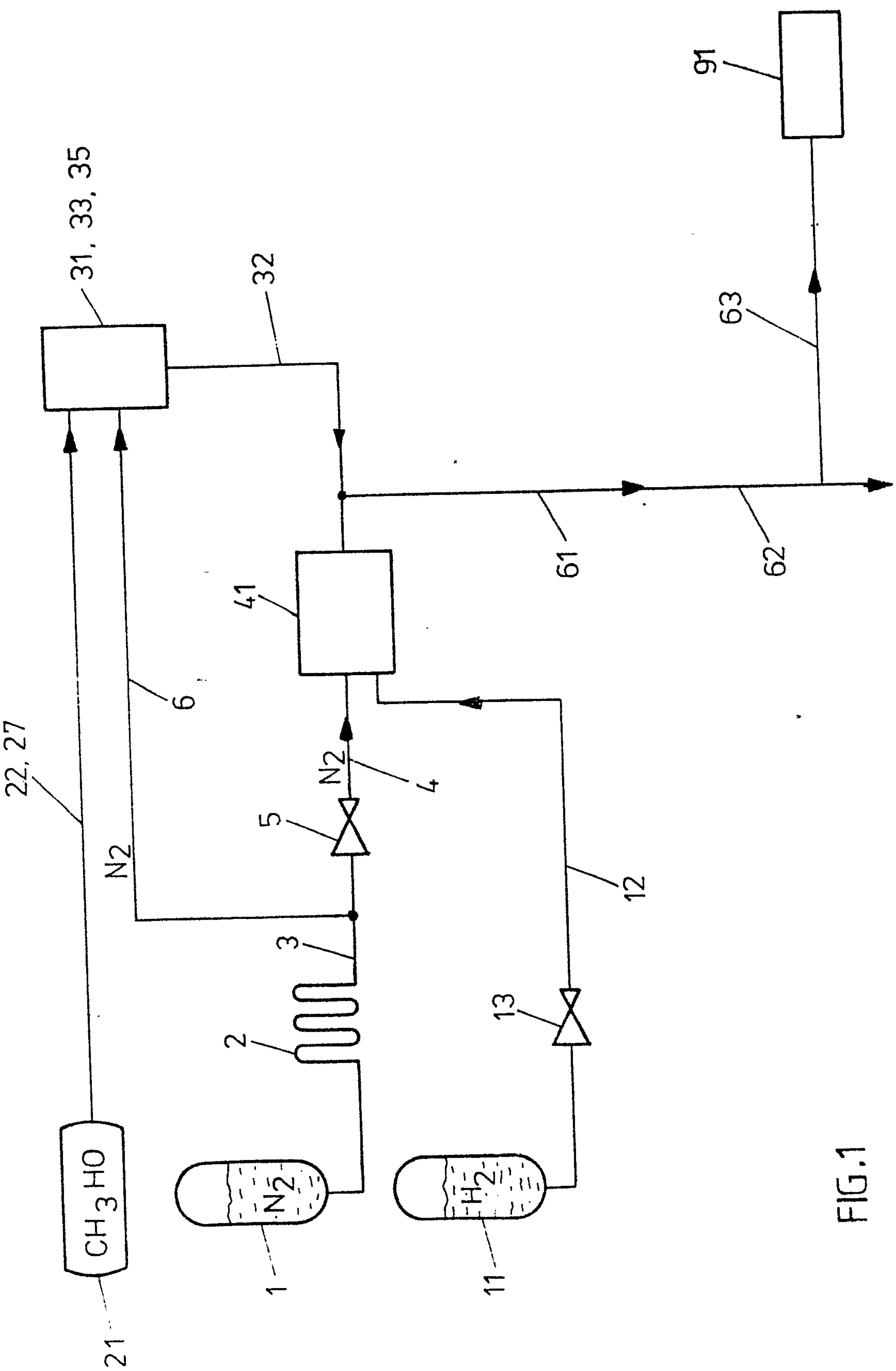

FIG.1

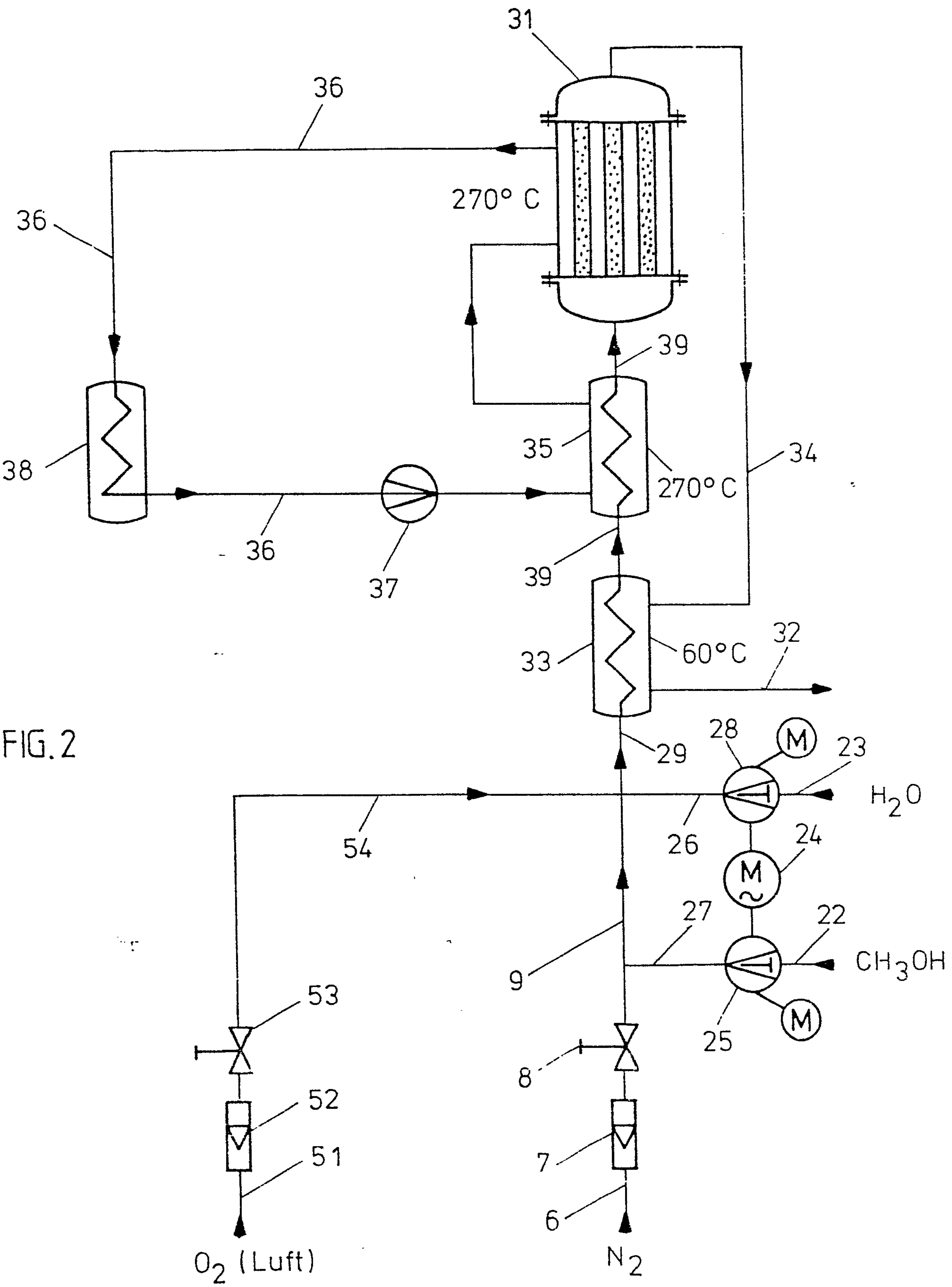
31
36
36
270° C
38
35
270° C
34
36
37
39
39
33
60°C
32
29
28
23
$H_2O$
54
26
24
27
22
9
$CH_3OH$
53
8
25
52
51
7
6
$O_2$ (Luft)
$N_2$

FIG. 2

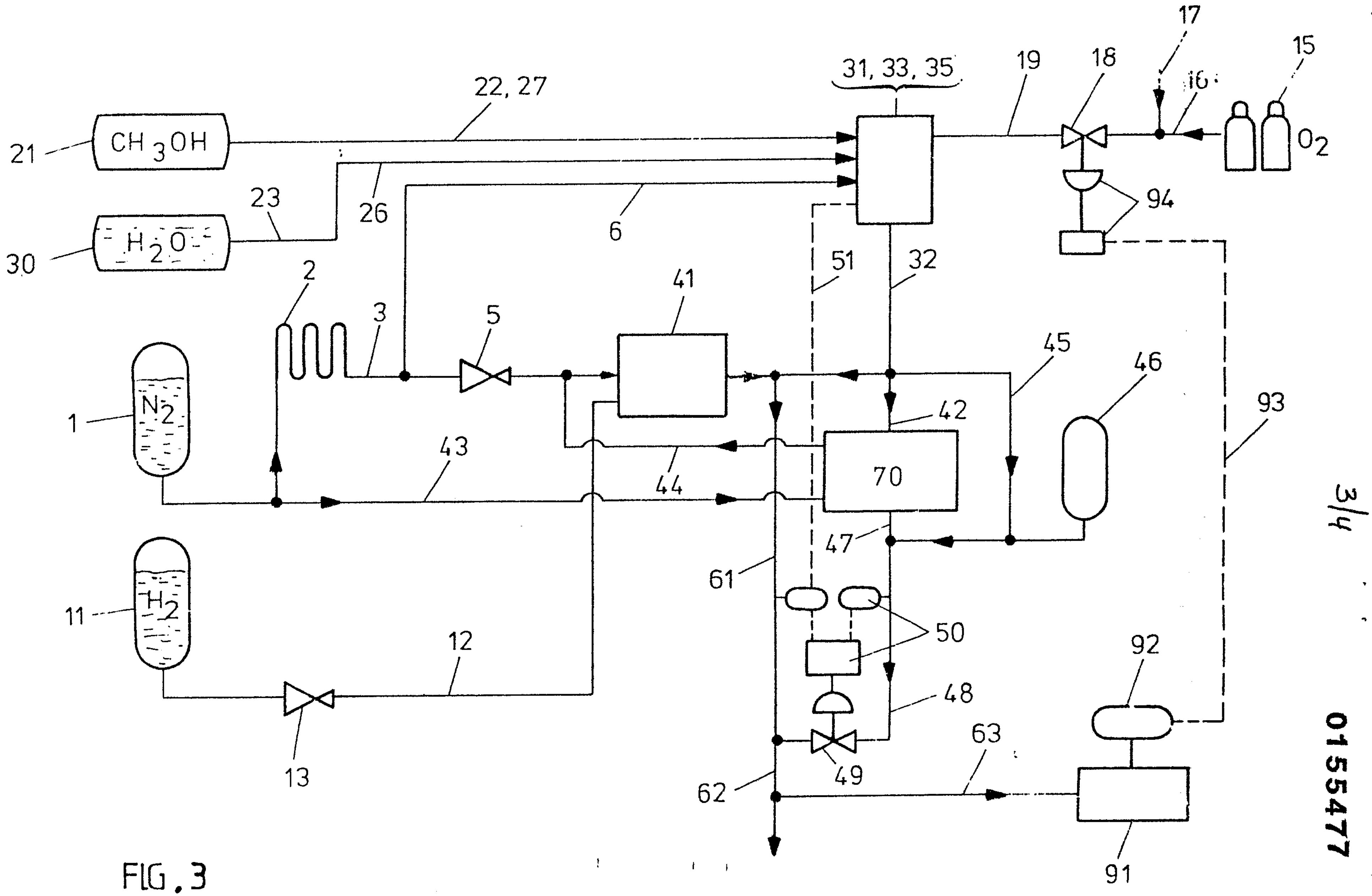
31, 33, 35
19
18
17
16
15
$O_2$
21
$CH_3OH$
22, 27
30
$H_2O$
23
26
6
94
51
32
41
2
3
5
45
46
1
$N_2$
42
43
44
70
93
47
61
11
$H_2$
50
12
92
48
13
49
63
62
91

FIG. 3

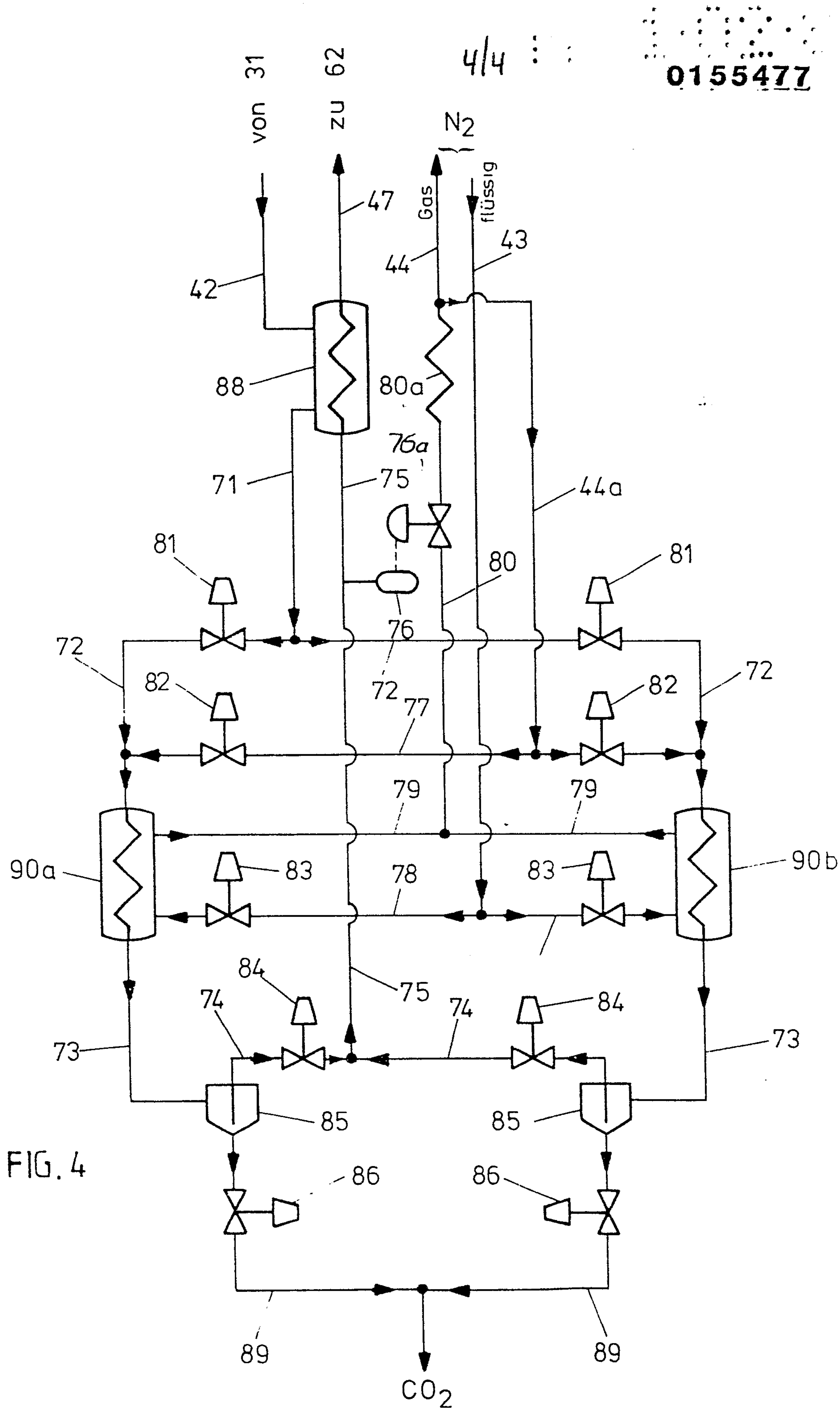
von 31
zu 62
$N_2$
Gas
flüssig
42
47
44
43
88
80a
76a
71
75
44a
81
81
80
76
72
72
72
72
82
82
77
79
79
90a
90b
83
83
78
75
84
84
74
74
73
73
85
85
86
86
89
89
$CO_2$

FIG. 4